# EUROPEAN PATENT SPECIFICATION

(11) **EP 3 835 614 B1**
(45) Date of publication and mention of the grant of the patent: **12.02.2025**
(21) Application number: 19425089.0
(22) Date of filing: 13.12.2019
(51) Int. Cl.: F16F 9/06, F16F 9/48, F16F 9/49, F16F 9/02, E05F 5/10

(54) **SHOCK ABSORBER DEVICE**
STOSSDÄMPFERVORRICHTUNG
DISPOSITIF D'ABSORPTION DE CHOCS

(43) Date of publication of application: 16.06.2021
(73) Proprietor: Vapsint S.r.l., 31010 Godega di S. Urbano (TV) (IT)
(72) Inventor: DAL CIN, Andrea, 31016 Cordignano (IT); BROKKAAR, Michiel, 8242 CJ Lelystad (NL)
(74) Representative: Petraz, Gilberto Luigi

(56) References cited:
- EP-A1- 1 970 593
- FR-A- 563 913
- JP-A- H01 135 933
- US-A- 4 909 488
- US-B2- 7 140 601

## Description

### FIELD OF THE INVENTION

The present invention concerns a shock absorber device suitable to cushion a mobile element with respect to a fixed element, to prevent the former from impacting brusquely against the latter.

In particular, the invention concerns a shock absorber device of the gas spring type, provided with a double braking effect, regardless of the installation and work orientation of the shock absorber device.

Embodiments of the present invention can be applied, by way of non-restrictive example only, to the mechanisms for opening and closing components such as furnishing elements, frames, doors or windows, gates, trunks, or hatches for means of transport, industrial machines, medical or fitness apparatuses, or suchlike.

### BACKGROUND OF THE INVENTION

It is known that most of the opening/closing mechanisms of components such as furnishing elements, frames, doors or windows, gates, trunks for means of transport, industrial machines, medical or fitness apparatuses, or suchlike, are equipped with shock absorber devices.

These shock absorber devices are configured to facilitate the opening travel, or more generally the reciprocal distancing of two components connected to each other by an opening/closing mechanism reducing the necessary force that a user must impart, and to control the reciprocal closing travel, in order to prevent them colliding with each other, which, especially in the case of very heavy components, could cause damage to them.

For example, shock absorber devices are known, also indicated as gas springs, comprising a cylinder, inside which there is a gas, and a piston sliding in the cylinder, in which the compression force of the gas determines a pneumatic-type braking action.

The braking action given by the gas, however, for certain applications may not be sufficient, for example in the case of very heavy, or very delicate components, or if a more effective braking and slowing down action is required.

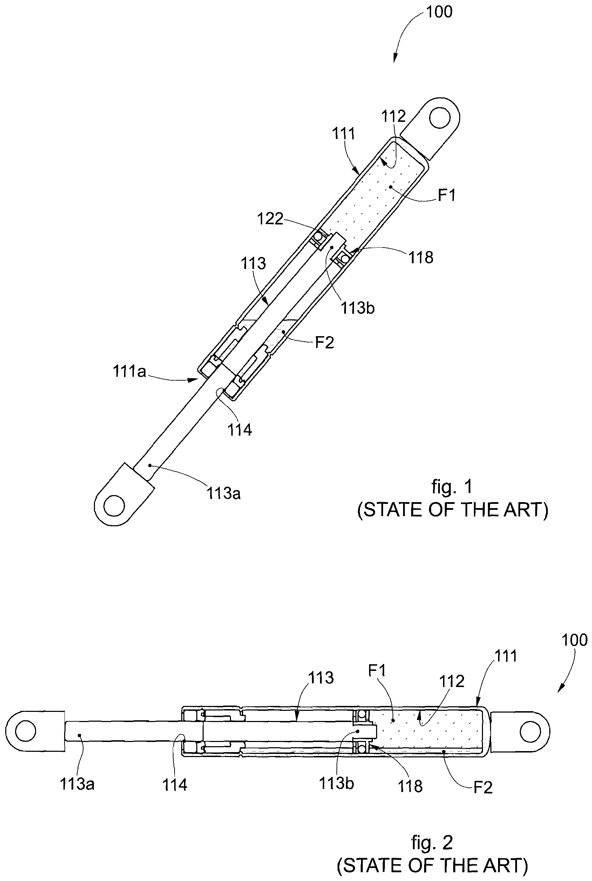

To try to solve these problems, shock absorber devices of the gas spring type have been developed, which provide a double braking action, both hydraulic and pneumatic. Figs. 1 and 2 show a known shock absorber device 100 of the gas spring type, which comprises a containing body 111 and a chamber 112 inside which at least a first operating fluid F1 is confined in its gaseous state and under pressure, for example nitrogen. The shock absorber device 100, also, comprises a piston 118 able to slide axially inside the chamber 112 and integral with a stem 113, which acts as an actuation member and partly protrudes from the containing body 111 from an aperture 114 of the latter in correspondence with one of its ends 111a. The stem 113 is provided with an external end 113a, always disposed outside the chamber 112, and with an opposite internal end 113b, always disposed inside the chamber 112, to which the piston 118 is connected. The piston 118 divides the space inside the containing body 111 into a first zone between the piston 118 and the end 111a, and a second zone, disposed on the opposite side of the piston 118 with respect to the first zone.

The first operating fluid F1 is compressed due to the advance of the stem 113 and therefore of the piston 118 inside the chamber 112, returning an opposite thrust, and, thus, behaving like a traditional mechanical spring, which is compressed during a travel of the stem 113 toward the inside of the chamber 112, and expands during the opposite travel.

The entry and exit speed of the stem 113 can be adjusted through suitable holes 122, or through channels provided on the piston 118.

The known shock absorber device 100, also, comprises a second operating fluid F2, having a density greater than the first operating fluid F1, such as for example a mineral oil, which is inserted inside the chamber 112 to further slow down the speed of the stem 113 and of the piston 118. In this way, when the piston 118 passes through the second, denser operating fluid F2, it is subjected to a greater slowdown than that provided by the first fluid.

In the traditional shock absorber device 100 shown in figs. 1 and 2 there are, therefore, two types of travel: a pneumatic one in which the piston slides through the aeriform fluid, and a hydraulic one in which the piston slides through a fluid in its liquid state.

This known solution, however, has application limits, dictated by the orientation of installation, and of work, of the shock absorber device, which, for this reason, is not effective in all conditions of use.

One of the disadvantages of these known shock absorber devices, in fact, is that the second fluid in its liquid state is free to move inside the chamber, so that in order to confine the fluid in its liquid state in a working position, suitable for braking, the shock absorber device must be used in a vertical position, or at least in a position that is only slightly inclined, so as to allow the liquid fluid to collect in one or the other end of the chamber.

This disadvantage is particularly evident and felt when the shock absorber device is placed in a horizontal position, as for example shown in fig. 2, in which the second fluid F2 in its liquid state is homogeneously distributed on the bottom, or along the lateral wall of the chamber 112. In this condition, in fact, the hydraulic braking effect is practically zero.

Documents US7140601B2, JPH01135933 A, US4909488A and EP1970593A1 disclose shock absorber devices of a known type.

There is therefore a need to perfect a double-effect shock absorber device, that is one which has a double shock absorber and braking action, which can overcome at least one of the disadvantages of the state of the art.

In particular, one purpose of the present invention is to provide a double-effect shock absorber device able to guarantee a high degree of braking in any of its installation/work orientations, even if the shock absorber device is in a horizontal position.

Another purpose of the present invention is to provide a shock absorber device which allows to obtain higher levels of shock absorption and braking effects than known shock absorber devices.

Another purpose of the invention is to provide a shock absorber device that is simple and inexpensive to manufacture but is efficient and effective on every occasion and in different applications.

Another purpose of the present invention is to provide a shock absorber device which has sizes comparable to those of known shock absorber devices and can be used to easily replace them in already existing applications.

Another purpose of the present invention is to obtain a device which allows to effectively slow down the travel of a mobile element toward/away from a fixed element in any working condition.

The Applicant has studied, tested and embodied the present invention to overcome the shortcomings of the state of the art and to obtain these and other purposes and advantages.

### SUMMARY OF THE INVENTION

The present invention is set forth and characterized in the independent claim. The dependent claims describe other characteristics of the invention or variants to the main inventive idea.

In accordance with the above purposes, a shock absorber device according to the invention, which overcomes the limits of the state of the art and eliminates the defects present therein, comprises a containing body defining at least one chamber inside which at least a first operating fluid is confined.

The shock absorber device, also, comprises a first plunger able to slide axially inside the chamber to compress/expand the first operating fluid.

The first plunger comprises a first piston, sliding in the chamber, and a first actuation member connected to the piston, which partly protrudes from one end of the containing body.

The sliding piston divides the chamber into a first zone disposed between the piston and the end of the containing body, and a second zone disposed on the opposite side of the piston with respect to the first zone.

The piston is provided with channels, or passage gaps, through which the first operating fluid can pass.

The first operating fluid determines a braking pressure which acts on the first piston, causing a first braking action thereof.

The first plunger is provided with an external end, in correspondence with the end of the actuation member, which is always outside the chamber, and with an opposite internal end, in correspondence with the first piston, which is always inside the chamber.

In accordance with one aspect of the present invention, the shock absorber device comprises an internal shock absorber unit disposed inside the chamber.

The internal shock absorber unit comprises a diaphragm configured to divide the chamber into a first braking section, inside which the first operating fluid is confined, and into a second braking section.

A second operating fluid is confined inside the second braking section.

Thanks to the presence of the diaphragm, the chamber is hermetically divided into two completely separate braking sections, and between which there is no exchange of fluids. This allows to keep the second operating fluid confined in correspondence with one end of the containing body, preventing the dispersion thereof, which, otherwise, in some installation conditions, could result in a reduced, if not zero, shock absorption action.

According to some embodiments, the second operating fluid can be configured to have a greater resistance than the first operating fluid, so as to cause a slowing down of the speed of movement of the first plunger with respect to that supplied by the first operating fluid.

The internal shock absorber unit, also, comprises a second plunger able to slide axially in the second section and slidingly associated with the diaphragm.

The second plunger comprises a second piston able to slide axially in the second section, and a second actuation member connected to the second piston, which partly extends in the first section through the diaphragm.

The second plunger is provided with a distal end in correspondence with the actuation member, which is always disposed inside the first braking section and is suitable to cooperate, during use, with the first plunger, and with an opposite proximal end, in correspondence with the second piston, which is always disposed inside the second braking section and slides inside the second operating fluid.

The first and second plungers are configured to cooperate with each other, so that the braking action supplied by the second operating fluid acting on the second plunger, is transferred to the first plunger, slowing down its speed of movement.

In particular, during use, and in the closed condition of the shock absorber device, the internal end of the first plunger, that is the first piston, comes into contact with the distal end of the second plunger, that is the second actuation member.

This configuration of the shock absorber device allows to obtain a first shock absorption, given by the first plunger cooperating with the first operating fluid, and a second shock absorption, given by the cooperation of the first plunger with the second plunger, and with the second operating fluid.

According to some embodiments, the first operating fluid can be an aeriform or gaseous fluid, while the second operating fluid can be a fluid in its liquid state. In this case, a first pneumatic shock absorption, and a second hydraulic shock absorption are obtained.

According to a possible variant, the first operating fluid is a gaseous fluid having a first pressure, and the second operating fluid can be a gaseous fluid having a second pressure, greater than the first pressure. According to this variant, both braking actions can be the pneumatic type.

According to the present invention, the diaphragm can be configured to deform or move in such a way as to compensate for the increase in volume of the second section given by the entry into it of a portion of the second stem.

According to some embodiments, the diaphragm and the second plunger are floating on said second fluid and are configured to move in the opposite direction to the movement of the second stem.

According to further embodiments, the internal shock absorber unit comprises elastic means disposed inside the second section and configured to exert sufficient force on the second plunger to return it to the extended condition, that is the condition in which the portion of the second stem, outside the second section of the chamber, is maximum. This guarantees that the second plunger, when not stressed by the first plunger, always returns to the extended condition. Since the gas pressure inside the first section acts in the same way both on the diaphragm, and also on the second plunger, in fact, both are stationary because the forces are balanced.

According to further embodiments, the internal shock absorber unit comprises a containing element configured to contain the elastic element and keep it at least partly compressed, preventing its complete extension when there is no force acting on it.

### BRIEF DESCRIPTION OF THE DRAWINGS

These and other aspects, characteristics and advantages of the present invention will become apparent from the following description of some embodiments, given as a non-restrictive example, with reference to the attached drawings wherein:
- fig. 1 is a section view of a shock absorber device of a type known in the state of the art, disposed in an inclined position;
- fig. 2 is a section view of the shock absorber device of fig. 1, disposed in a horizontal position;
- fig. 3 is a section view of a double-effect shock absorber device according to some embodiments of the present invention in a first extended operating condition;
- fig. 4 is a section view of the shock absorber device of fig. 3 in a second partly closed operating condition;
- fig. 5 is a section view of the shock absorber device of fig. 3 in a third closed operating condition.

To facilitate comprehension, the same reference numbers have been used, where possible, to identify identical common elements in the figures. It is understood that elements and characteristics of one embodiment can conveniently be incorporated into other embodiments without further clarifications.

### DETAILED DESCRIPTION OF SOME EMBODIMENTS

We will now refer in detail to the various embodiments of the present invention, of which one or more examples are shown in the attached figures. Each example is supplied by way of illustration of the invention and shall not be understood as a limitation thereof. For example, the characteristics shown or described, insomuch as they are part of one embodiment, can be varied or adopted on, or in association with, other embodiments to produce another embodiment. It is understood that the present invention shall comprise all such modifications and variants.

Before describing these embodiments, we must, also, clarify that the present description is not limited in its application to details of the construction and disposition of the components as described in the following description using the attached figures. The present description can provide other embodiments and can be obtained or executed in various other ways. We must, also, clarify that the phraseology and terminology used here is for the purposes of description only and cannot be considered as limitative.

Embodiments described here concern a shock absorber device, indicated by the reference number 10 in the attached figures. In particular, the shock absorber device 10 is a gas spring, provided with a double shock absorber and braking effect.

By way of example only, the device 10 can be applied in the doors or trunks of motor vehicles, in the protective casings of industrial machines, in doors for furniture, in medical and fitness apparatuses, on motorized curtains and covers, inside the sale counters of supermarkets and butchers or travelling sales counters, or other.

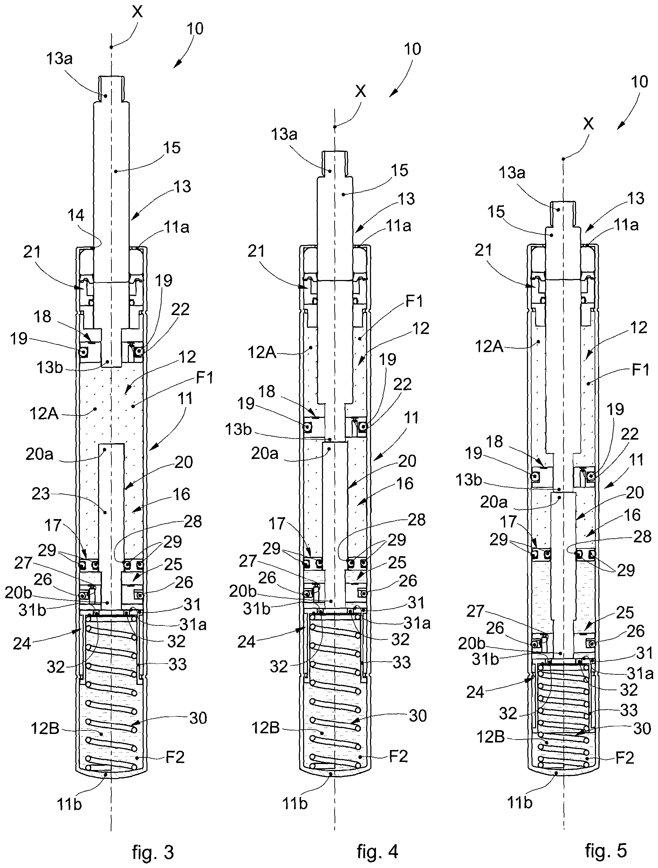

In accordance with some embodiments, shown for example in figs. 3-5, the shock absorber device 10 comprises a containing body 11, which defines a chamber 12 inside which at least a first operating fluid F1 is confined.

According to some embodiments, the first operating fluid F1 can be a gaseous fluid. By way of example, the first operating fluid F1 can be, for example, air, nitrogen, or other gas.

According to possible embodiments, the containing body 11 can have a circular cross section, which allows to obtain a homogeneous distribution of the pressure of the fluid inside the chamber 12, and therefore to avoid points, or zones, where tensions are concentrated, which could cause malfunctions or failures of the material that constitutes the containing body 11. Advantageously, the section is constant along an operating axis X along which the containing body 11 develops.

According to other embodiments, however, the containing body 11 can have a polygonal or elliptical section shape.

The containing body 11 has an open end 11a in correspondence with which there is an aperture 14, and an opposite bottom end 11b.

The bottom end 11b can be provided, externally, with an attachment joint, not shown, provided to allow the installation of the shock absorber device 10.

The device 10, also, comprises a first plunger 13 able to slide axially inside the chamber 12 to compress/expand the first operating fluid F1.

The first plunger 13 can be inserted at least partly inside the chamber 12 in correspondence with the aperture 14 defined axially on the containing body 11.

Sealing and guide means 21 can be disposed inside the chamber 12 in proximity to the aperture 14 both to seal the chamber 12 hermetically with respect to the outside, preventing leakages of the first operating fluid F1, and also to guide the plunger 13 at least in the initial segment, allowing to prevent unwanted peak loads.

According to possible embodiments, the sealing and guide means 21 can be chosen in a group comprising sealing rings, support ring nuts, gaskets, or a combination thereof.

The first plunger 13 is provided with an external end 13a, always disposed outside the chamber 12, in any operating condition whatsoever, and with an opposite internal end 13b, always disposed inside the chamber 12.

In accordance with some embodiments, the first plunger 13 comprises an actuation member, for example a stem 15, able to slide axially inside the chamber 12. The stem 15 extends along the operating axis X, at least partly protruding from the containing body 11 through the aperture 14.

The first plunger 13, also, comprises a piston 18 attached to the stem 15 in correspondence with its internal end 13b.

The piston 18 is configured to slide inside the first operating fluid F1, receiving a braking pressure from it.

In accordance with some embodiments, the piston 18 can be provided with passage gaps 22, or through holes, configured to allow the passage of the first operating fluid F1 from one part of the piston 18 to the other in an axial direction. The shape and size of the passage gaps 22 allow to adjust the sliding speed of the stem 15 inside the chamber 12.

In correspondence with an external end 13a, the stem 15 can have an attachment joint, not shown, opposite to an attachment joint disposed on the containing body 11.

The stem 15 can have a substantially cylindrical section, but in general it can have any section shape whatsoever, even not correlated to the section shape of the chamber 12, since the function of the stem 15 is to decrease the free volume of the chamber 12, and increase/decrease the pressure of the first operating fluid F1 present therein so as to be subjected to a braking pressure, in this case of the pneumatic type.

The stem 15 can have a transverse size, in this case the external diameter, smaller than the transverse size, in this case the internal diameter, of the chamber 12. In particular, the ratio between the internal diameter of the chamber 12 and the external diameter of the stem 15 can be correlated to a pneumatic braking factor of the plunger 13 with respect to the first operating fluid F1. In fact, with the same mass and initial pressure of the first operating fluid F1 present in the chamber 12, the greater the external diameter of the stem 15, the greater the pneumatic braking factor.

The piston 18 can have a shape substantially correlated to the cross section of the chamber 12. In particular, the piston 18 can have a transverse size slightly less than the transverse size of the chamber 12, so as to allow the sliding contact of the piston 18 on the lateral walls of the chamber 12 preventing, at the same time, any peripheral leakages of the first operating fluid F1.

In accordance with some embodiments, to facilitate the sliding of the piston 18 along the lateral walls of the chamber 12, the piston 18 can be equipped with sliding means 19, for example balls.

In accordance with one aspect of the present invention, the device 10 comprises an internal shock absorber unit 16 disposed inside the chamber 12, which is configured to confer a second braking action on the first plunger 13 in addition to the braking action supplied by the first operating fluid F1.

According to some embodiments, the internal shock absorber unit 16 comprises a diaphragm 17 configured to hermetically divide the chamber 12 into a first braking section 12A and a second braking section 12B.

The first operating fluid F1 is confined inside the first braking section 12A.

In the second braking section 12B a second operating fluid F2 is confined.

In accordance with some embodiments, the second operating fluid F2 has a different density than the first operating fluid F1.

According to some embodiments, the second operating fluid F2 can have density and/or pressure greater than the first operating fluid F1, exerting a braking and slowing action which is greater than that supplied by the first operating fluid F1.

According to some embodiments, the second operating fluid F2 can be a fluid in its liquid state. In this case, a first pneumatic shock absorption and a second hydraulic shock absorption are obtained.

According to a possible variant, the second operating fluid F2 can be a gaseous fluid having a second pressure, greater than the first pressure. According to this variant, both the braking actions can be the pneumatic type.

The first operating fluid F1 can be a fluid in the gaseous state under pressure, selected in a group comprising air, nitrogen, or other gases, or a combination thereof.

The second operating fluid F2 can be a fluid in its liquid state selected from a group comprising mineral oil, vegetable oil, or silicone oil, or a combination thereof.

According to some embodiments, the internal shock absorber unit 16, also, comprises a second plunger 20 slidingly associated with the mobile diaphragm 17.

The second plunger 20 is configured to cooperate with the second operating fluid F2.

The second plunger 20 is provided with a distal end 20a, which is always disposed inside the first braking section 12A and is configured to cooperate with the first plunger 13, and with an opposite proximal end 20b, which is always disposed inside the second braking zone 12B and cooperating with the second operating fluid F2 to exert a braking action on the first plunger 13.

Thanks to the presence of the diaphragm 17, it is possible to confine the second operating fluid F2 in a desired way, preventing, for example, spillages thereof throughout the chamber 12. Being able to confine the second operating fluid F2 to one end of the chamber 12 allows to make the hydraulic braking effect always effective, regardless of the position of installation and of work of the shock absorber device 10.

In accordance with some embodiments, the second plunger 20 comprises a second actuation member, for example a stem 23 which extends along the operating axis X and is completely and always contained inside the chamber 12.

According to some embodiments, the second stem 23 has a smaller transverse size than the transverse size of the first stem 15.

The second stem 23 is able to be thrust in the direction of the operating axis X, in correspondence with its distal end 20a, by the first plunger 13, in particular by the piston 18 or by the internal end 13a of the stem 15. For this purpose, the distal end 20a can have a substantially flat surface profile so as to increase the area of contact with the piston 18 or the internal end 13b and guarantee an effective, uniform and perfectly axial thrust effect.

The second plunger 20, similarly to the first plunger 13, comprises a second piston 25 attached to the stem 23 in correspondence with the proximal end 20b. The piston 25 is positioned between the mobile diaphragm 17 and the bottom end 1 1b of the containing body 11.

The piston 25 can have a shape substantially correlated to the cross section of the chamber 12. In particular, the piston 25 has a transverse size slightly less than the transverse size of the chamber 12, so as to allow the sliding contact of the second piston 25 on the lateral walls of the chamber 12 preventing, at the same time, peripheral leakages of the second operating fluid F2.

In accordance with some embodiments, to facilitate the sliding of the second piston 25 along the lateral walls of the chamber 12, the second piston 25 can be equipped with sliding means 26, for example balls.

In accordance with some embodiments, the second piston 25 can be provided with passage gaps 27 configured to allow the passage of the second operating fluid F2 from one part of the second piston 25 to the other in an axial direction. The shape and size of the passage gaps 27 allow to adjust the sliding speed of the second stem 23 inside the chamber 12, in particular in the second braking section 12B.

The diaphragm 17 has a central passage 28 configured to allow the sliding of the second stem 23 and simultaneously prevent spillages of the first operating fluid F1 and the second operating fluid F2 at the center. The central passage 28 allows the second stem 23 to be disposed for one part inside the first braking section 12A and for the other part inside the second braking section 12B.

In accordance with some embodiments, the diaphragm 17 is configured to deform or move in the opposite direction to the direction of advance of the second stem 23 so as to compensate for the increase in volume of the second section 12B given by the volume of the portion of the second stem 23.

This is very useful if the second operating fluid F2 is in its liquid state, and therefore not compressible, unlike the first operating fluid F1.

According to some embodiments, the diaphragm 17 can be floating, that is it can be free to slide inside the chamber 12 in the direction of the operating axis X. The movement of the diaphragm 17 is correlated to the thrust forces exerted by the first operating fluid F1 on one side, and by the second operating fluid F2 on the other side.

According to some embodiments, the diaphragm 17 can have a shape substantially correlated to the cross section of the chamber 12. In particular, the diaphragm 17 can have a transverse size slightly less than the transverse size of the chamber 12, so as to slide on the lateral walls thereof preventing, at the same time, peripheral leakages of the first operating fluid F1 in the second braking section 12B and of the second operating fluid F2 in the first braking section 12A.

In this specific case, the diaphragm 17 can have a discoidal cylindrical shape and include sliding means 29 both in correspondence with its external surface in sliding contact with the lateral walls of the chamber 12, and also in correspondence with an internal surface of the central passage 28, to allow effective movement of the stem 23.

According to possible variant embodiments, the diaphragm 17 can be made of elastic and deformable material, and be attached in correspondence with the lateral walls of the chamber 12.

In accordance with some embodiments, the internal shock absorber unit 16 can comprise elastic means configured to cooperate with the second plunger 20 and suitable to allow the second plunger 20 to return to the extended condition (see fig. 3) when the first plunger 13 is not in contact with it.

According to some embodiments, the elastic means comprise at least one elastic element 30 disposed resting on the bottom end 11b of the containing body 11 and configured to elastically support, and generate a counter thrust on, the second plunger 20.

In accordance with possible embodiments, the elastic element 30 can be, for example, a mechanical spring chosen from a group comprising a helical spring, a disc spring or a rubber spring.

According to some embodiments, the elastic element 30 is disposed in the second braking zone 12B, completely, or almost, immersed in the second operating fluid F2. The elastic element 30 in particular can be disposed between the diaphragm 17 and the bottom end 11b.

In accordance with some embodiments, the internal shock absorber unit 16 comprises a containing element 24, configured to contain the elastic element 30 and keep it at least partly compressed.

According to some embodiments, the containing element 24 can be shaped like an inverted cup or glass, configured to allow the support of the elastic element 30 on one side, and the support of the second plunger 20, in particular of the second piston 25, or of the second stem 23 on the other side.

According to some embodiments, the containing element 24 surrounds the elastic element 30 laterally, at least for a portion of its axial development, so as to allow the correct compression and extension thereof, preventing deformations of the elastic element 30.

In addition, the containing element 24 allows to keep the elastic element 30 always compressed, preventing its complete extension at zero force.

According to some embodiments, the containing element 24 can be floating, that is mobile vertically along the operating axis X.

In this way, the containing element 24 can accompany the compression and extension of the elastic element 30, allowing it to be kept compressed at all times.

According to some embodiments, the containing element 24 comprises a support wall 31 provided with a thrust surface 31a, on which the piston 25 or the stem 23 rests, and with a counter-thrust surface 31b, on which the elastic element 30 acts.

The support wall 31 is provided with through holes 32 configured to allow the passage of the second operating fluid F2 when the stem 23 enters the second braking zone 12B.

The containing element 24 comprises a lateral wall 33, in this specific case, annular, configured to contain at least part of the elastic element 30 laterally. In particular, the height of the lateral wall 33 in the direction of the operating axis X is such that when the elastic element is completely compressed, the lateral wall 33 does not contact the bottom end 1 1b of the containing body 11.

In accordance with some embodiments, shown in figs. 3-5, a possible operating sequence of the double-effect shock absorber device 10 is shown.

The first plunger 13 is configured to pass from a completely extended position in which the first stem 15 is almost completely outside the chamber 12, that is outside the first braking section 12A (fig. 3), to a completely compressed position, in which the first stem 15 is almost completely inside the chamber 12, that is inside the first braking section 12A and thrusts the second plunger 20 in the direction of the operating axis X (fig. 5).

When the first stem 15 enters the chamber 12, the useful volume of the chamber 12 decreases, in this specific case that of the first braking zone 12A, and, consequently, the pressure of the first operating fluid F1, which acts on the first stem 15, increases, defining a pneumatic slowdown thereon.

Similarly, the second plunger 20 is configured to pass from a standby position, extended, in which the second stem 23 is almost completely outside the second braking zone 12B (fig. 3), to an operating position, in which the second stem 23 is almost completely inside the second braking zone 12B and, thrust by the first plunger 13, exerts a pressure on the second operating fluid F2, receiving from it a thrust in the opposite direction.

The action of the first plunger 13 on the second plunger 20 also determines a compression of the elastic element 30 (fig. 5).

When the second stem 23 enters the second braking zone 12B, the useful volume of the second braking zone 12B decreases, and the second operating fluid F2 generates, in addition to a further hydraulic - or pneumatic - slowdown of the second stem 23, also a thrust in the direction of the operating axis X, contrary to the direction of movement of the stem 23, on the diaphragm 17.

The diaphragm 17 and the second plunger 20 are in a condition of balanced forces, on the one side subject to the pressure of the first operating fluid F1, and on the other side to a contrary pressure of the second operating fluid F2.

When the first plunger 13 moves away from the second plunger 20, the elastic element 30 tends to extend again, generating sufficient force to return the second plunger 20 to the standby position, and therefore the first plunger 13 to the fully extended position.

It is clear that modifications and/or additions of parts may be made to the double-effect shock absorber device 10 as described heretofore, without departing from the scope of the present invention as defined by the claims.

It is also clear that, although the present invention has been described with reference to some specific examples, a person of skill in the art shall certainly be able to achieve many other equivalent forms of double-effect shock absorber device 10, having the characteristics as set forth in the claims and hence all coming within the scope of protection defined thereby.

In the following claims, the sole purpose of the references in brackets is to facilitate reading and they must not be considered as restrictive factors with regard to the scope of protection underlying the specific claims.

## Claims

1. Shock absorber device comprising:
- a containing body (11) defining a chamber (12) inside which at least a first operating fluid (F1) is confined, and provided with a closed bottom end (11b) and an opposite end (11a), in which there is an aperture (14);
- a first plunger (13) able to slide axially inside said chamber (12) and configured to compress/expand said first operating fluid (F1) to obtain a first braking action, said first plunger (13) comprising a first piston (18) able to slide in the chamber (12), and a first actuation member (15) connected to the piston (18), which partly protrudes from said aperture (14) of said containing body (11), and
- an internal shock absorber unit (16) disposed inside said chamber (12) and configured to provide a second braking action, which comprises:
- a diaphragm (17) configured to hermetically divide said chamber (12) into a first braking section (12A) inside which said first operating fluid (F1) is confined and into a second braking section (12B) inside which a second operating fluid (F2) is confined,
- a second plunger (20) slidingly associated with said mobile diaphragm (17), comprising a distal end (20a), disposed in said first braking zone (12A) and configured to cooperate with said first plunger (13), and an opposite proximal end (20b), disposed in said second braking zone (20b) and configured to cooperate with said second operating fluid (F2) in order to exert a second braking action on said first plunger (13), **characterized in that** said diaphragm (17) is configured to deform or move along said operating axis (X) so as to compensate for an increase in the volume of said second section (12B) given by the entry into it of a portion of said second plunger (20).

2. Shock absorber device as in claim 1, **characterized in that** said second plunger (20) comprises a second piston (25) provided on said proximal end (20b) and positioned between said diaphragm (17) and said bottom end (11b), and a second actuation member (23) connected to said second piston (25), which extends partly in said first section (12A), and whose end defines said distal end (20a).

3. Shock absorber device as in claim 2, **characterized in that** said second piston (25) is provided with passage gaps (27) configured to allow the passage of the second operating fluid (F2) from one side of the piston to the other (25) in axial direction.

4. Shock absorber device as in either of claims 2 or 3, **characterized in that** said diaphragm (17) has a central passage (28) configured to allow the sliding of said second stem (23) and prevent spillages of said first operating fluid (F1) or of said second operating fluid (F2).

5. Shock absorber device as in any claim hereinbefore, **characterized in that** said diaphragm (17) and said second plunger (20) are floating on said second fluid (F2) and are configured to move in the opposite direction to the movement of said second plunger (20).

6. Shock absorber device as in claim 5, **characterized in that** said diaphragm (17) has a cross section related to the cross section of said chamber (12), and has a transverse size slightly less than the transverse size of the chamber (12), so as to slide on the lateral walls thereof, preventing peripheral leakages of the first operating fluid (F1) in the second braking section (12B) and of the second operating fluid (F2) in the first braking section (12A).

7. Shock absorber device as in any claim hereinbefore, **characterized in that** said internal shock absorber unit (16) comprises elastic means (30) configured to elastically support, and generate a counter thrust on, said second plunger (20).

8. Shock absorber device as in claim 7, **characterized in that** said elastic means (30) comprise a mechanical spring selected from a group comprising a helical spring, a disc spring or a rubber spring.

9. Shock absorber device as in claim 7 or 8, **characterized in that** said internal shock absorber unit (16) comprises a containing element (24) configured to contain and maintain said elastic means (30) at least partly compressed, preventing a complete extension thereof when there is no force acting on them.

10. Shock absorber device as in claim 9, **characterized in that** said containing element (24) is shaped like an inverted cup or glass, and is configured to allow, on the one side, the proximal end (20b) of said second plunger (20) to rest, and on the other side, to allow to support and contain said elastic means (30).

11. Shock absorber device as in claim 10, **characterized in that** said containing element (24) is floating vertically along said operating axis (X), being always disposed in said second braking zone (12B) between said diaphragm (17) and said bottom end (11b).

12. Shock absorber device as in any claim hereinbefore, **characterized in that** said second operating fluid (F2) has a density and/or pressure greater than said first operating fluid (F1).

13. Shock absorber device as in any claim hereinbefore, **characterized in that** said first operating fluid (F1) is a gaseous fluid selected from air or nitrogen, and said second operating fluid (F2) is a fluid in its liquid state chosen from mineral oil, vegetable oil or silicone oil.

## Patentansprüche

1. Stoßdämpfervorrichtung umfassend:
- einen Aufnahmekörper (11), der eine Kammer (12) definiert, in der mindestens ein erstes Betriebsfluid (F1) eingeschlossen ist, und der mit einem geschlossenen unteren Ende (11b) und einem gegenüberliegenden Ende (11a) versehen ist, in dem sich eine Öffnung (14) befindet;
- einen ersten Kolben (13), der in der Lage ist, axial innerhalb der Kammer (12) zu gleiten, und der so konfiguriert ist, dass er das erste Betriebsfluid (F1) komprimiert/expandiert, um eine erste Bremswirkung zu erzielen, wobei der erste Kolben (13) einen ersten Kolbenkopf (18), der in der Kammer (12) gleiten kann, und ein erstes Betätigungselement (15), das mit dem Kolbenkopf (18) verbunden ist und teilweise aus der Öffnung (14) des Aufnahmekörpers (11) herausragt, umfasst, und
- eine interne Stoßdämpfereinheit (16), die innerhalb der Kammer (12) angeordnet und so konfiguriert ist, dass sie eine zweite Bremswirkung bereitstellt, und umfasst:
- eine Membran (17), die so konfiguriert ist, dass sie die Kammer (12) hermetisch in einen ersten Bremsabschnitt (12A), in dem das erste Betriebsfluid (F1) eingeschlossen ist, und in einen zweiten Bremsabschnitt (12B), in dem ein zweites Betriebsfluid (F2) eingeschlossen ist, unterteilt,
- einen zweiten Kolben (20), der gleitend mit der beweglichen Membran (17) verbunden ist und ein distales Ende (20a), das in der ersten Bremszone (12A) angeordnet und so konfiguriert ist, dass es mit dem ersten Kolben (13) zusammenwirkt, und ein gegenüberliegendes proximales Ende (20b), das in der zweiten Bremszone (20b) angeordnet und so konfiguriert ist, dass es mit dem zweiten Betriebsfluid (F2) zusammenwirkt, um eine zweite Bremswirkung auf den ersten Kolben (13) auszuüben, umfasst, **dadurch gekennzeichnet, dass** die Membran (17) so konfiguriert ist, dass sie sich entlang der Betriebsachse (X) verformt oder bewegt, um eine Vergrößerung des Volumens des zweiten Abschnitts (12B), die durch den Eintritt eines Teils des zweiten Kolbens (20) in diesen gegeben ist, zu kompensieren.

2. Stoßdämpfervorrichtung nach Anspruch 1, **dadurch gekennzeichnet, dass** der zweite Kolben (20) einen zweiten Kolbenkopf (25), der an dem proximalen Ende (20b) vorgesehen und zwischen der Membran (17) und dem unteren Ende (11b) positioniert ist, und ein zweites Betätigungselement (23), das mit dem zweiten Kolbenkopf (25) verbunden ist und sich teilweise in dem ersten Abschnitt (12A) erstreckt und dessen Ende das distale Ende (20a) definiert, umfasst.

3. Stoßdämpfervorrichtung nach Anspruch 2, **dadurch gekennzeichnet, dass** der zweite Kolbenkopf (25) mit Durchgangslücken (27) versehen ist, die so konfiguriert sind, dass sie den Durchgang des zweiten Betriebsfluids (F2) von einer Seite des Kolbens zur anderen (25) in axialer Richtung ermöglichen.

4. Stoßdämpfervorrichtung nach einem der Ansprüche 2 oder 3, **dadurch gekennzeichnet, dass** die Membran (17) einen zentralen Durchgang (28) aufweist, der so konfiguriert ist, dass er das Gleiten des zweiten Schafts (23) ermöglicht und ein Austreten des ersten Betriebsfluids (F1) oder des zweiten Betriebsfluids (F2) verhindert.

5. Stoßdämpfervorrichtung nach irgendeinem der vorhergehenden Ansprüche, **dadurch gekennzeichnet, dass** die Membran (17) und der zweite Kolben (20) auf dem zweiten Fluid (F2) schwimmen und so konfiguriert sind, dass sie sich in die entgegengesetzte Richtung zur Bewegung des zweiten Kolbens (20) bewegen.

6. Stoßdämpfervorrichtung nach Anspruch 5, **dadurch gekennzeichnet, dass** die Membran (17) einen Querschnitt hat, der mit dem Querschnitt der Kammer (12) in Beziehung steht, und eine Querabmessung hat, die geringfügig kleiner ist als die Querabmessung der Kammer (12), so dass sie auf deren Seitenwänden gleitet, wodurch Umfangsleckagen des ersten Betriebsfluids (F1) in dem zweiten Bremsabschnitt (12B) und des zweiten Betriebsfluids (F2) in dem ersten Bremsabschnitt (12A) verhindert werden.

7. Stoßdämpfervorrichtung nach irgendeinem der vorhergehenden Ansprüche, **dadurch gekennzeichnet, dass** die interne Stoßdämpfereinheit (16) elastische Mittel (30) umfasst, die so konfiguriert sind, dass sie den zweiten Kolben (20) elastisch stützen und einen Gegenschub auf ihn erzeugen.

8. Stoßdämpfervorrichtung nach Anspruch 7, **dadurch gekennzeichnet, dass** die elastischen Mittel (30) eine mechanische Feder umfassen, die aus einer Gruppe ausgewählt ist, die eine Schraubenfeder, eine Tellerfeder oder eine Gummifeder umfasst.

9. Stoßdämpfervorrichtung nach Anspruch 7 oder 8, **dadurch gekennzeichnet, dass** die interne Stoßdämpfereinheit (16) ein Aufnahmeelement (24) umfasst, das so konfiguriert ist, dass es die elastischen Mittel (30) aufnimmt und zumindest teilweise komprimiert hält, so dass eine vollständige Ausdehnung derselben verhindert wird, wenn keine Kraft auf sie einwirkt.

10. Stoßdämpfervorrichtung nach Anspruch 9, **dadurch gekennzeichnet, dass** das Aufnahmeelement (24) die Form eines umgekehrten Bechers oder Glases hat und so konfiguriert ist, dass es auf der einen Seite dem proximalen Ende (20b) des zweiten Plungers (20) erlaubt, zu ruhen, und auf der anderen Seite erlaubt, die elastischen Mittel (30) zu stützen und aufzunehmen.

11. Stoßdämpfervorrichtung nach Anspruch 10, **dadurch gekennzeichnet, dass** das Aufnahmeelement (24) vertikal entlang der Betriebsachse (X) schwimmt und immer in der zweiten Bremszone (12B) zwischen der Membran (17) und dem unteren Ende (11b) angeordnet ist.

12. Stoßdämpfervorrichtung nach irgendeinem der vorhergehenden Ansprüche, **dadurch gekennzeichnet, dass** das zweite Betriebsfluid (F2) eine höhere Dichte und/oder einen höheren Druck als das erste Betriebsfluid (F1) aufweist.

13. Stoßdämpfervorrichtung nach irgendeinem der vorhergehenden Ansprüche, **dadurch gekennzeichnet, dass** das erste Betriebsfluid (F1) ein gasförmiges Fluid ist, das aus Luft oder Stickstoff ausgewählt ist, und dass das zweite Betriebsfluid (F2) ein Fluid in flüssigem Zustand ist, das aus Mineralöl, Pflanzenöl oder Silikonöl ausgewählt ist.

## Revendications

1. Dispositif d'amortissement de chocs comprenant :
- un corps de contenant (11) définissant une chambre (12) à l'intérieur de laquelle est confiné au moins un premier fluide de fonctionnement (F1), et pourvu d'une extrémité inférieure fermée (11b) et d'une extrémité opposée (11a), dans laquelle se trouve une ouverture (14) ;
- un premier poussoir (13) apte à coulisser axialement à l'intérieur de ladite chambre (12) et configuré pour comprimer/détendre ledit premier fluide de fonctionnement (F1) afin d'obtenir une première action de freinage, ledit premier poussoir (13) comprenant un premier piston (18) apte à coulisser dans la chambre (12), et un premier organe d'actionnement (15) relié au piston (18), qui fait partiellement saillie de ladite ouverture (14) dudit corps de contenant (11), et
- une unité d'amortissement interne (16) disposée à l'intérieur de ladite chambre (12) et configurée pour fournir une seconde action de freinage, qui comprend :
- un diaphragme (17) configuré pour diviser hermétiquement ladite chambre (12) en une première section de freinage (12A) à l'intérieur de laquelle ledit premier fluide de fonctionnement (F1) est confiné et en une deuxième section de freinage (12B) à l'intérieur de laquelle est confiné un deuxième fluide de fonctionnement (F2),
- un second poussoir (20) associé de manière coulissante audit diaphragme (17), comprenant une extrémité distale (20a), disposée dans ladite première zone de freinage (12A) et configurée pour coopérer avec ledit premier poussoir (13), et une extrémité proximale opposée (20b), disposée dans ladite seconde zone de freinage (20b) et configurée pour coopérer avec ledit second fluide de fonctionnement (F2) afin d'exercer une seconde action de freinage sur ledit premier poussoir (13), **caractérisée en ce que** ledit diaphragme (17) est configurée pour se déformer ou se déplacer le long dudit axe de fonctionnement (X) de manière à compenser une augmentation du volume de ladite seconde section (12B) donnée par l'entrée dans celle-ci d'une portion dudit second poussoir (20).

2. Dispositif d'amortissement de chocs selon la revendication 1, **caractérisé en ce que** ledit second poussoir (20) comprend un second piston (25) prévu sur ladite extrémité proximale (20b) et positionné entre ledit diaphragme (17) et ladite extrémité inférieure (1 1b), et un second organe d'actionnement (23) relié audit second piston (25), qui s'étend en partie dans ladite première section (12A), et dont l'extrémité définit ladite extrémité distale (20a).

3. Dispositif d'amortissement de chocs selon la revendication 2, **caractérisé en ce que** ledit second piston (25) est pourvu d'espaces de passage (27) configurés pour permettre le passage du second fluide de fonctionnement (F2) d'un côté du piston à l'autre (25) dans la direction axiale.

4. Dispositif d'amortissement de chocs selon l'une des revendications 2 ou 3, **caractérisé par le fait que** le diaphragme (17) présente un passage central (28) configuré pour permettre le coulissement de la deuxième tige (23) et empêcher les déversements dudit premier fluide de fonctionnement (F1) ou dudit deuxième fluide de fonctionnement (F2).

5. Dispositif d'amortissement de chocs selon l'une quelconque des revendications précédentes, **caractérisé en ce que** ledit diaphragme (17) et ledit second poussoir (20) flottent sur ledit second fluide (F2) et sont configurés pour se déplacer dans le sens opposé au mouvement dudit second poussoir (20).

6. Dispositif d'amortissement de chocs selon la revendication 5, **caractérisé en ce que** ledit diaphragme (17) comprend une section transversale liée à la section transversale de ladite chambre (12), et a une taille transversale légèrement inférieure à la taille transversale de la chambre (12), de manière à coulisser sur les parois latérales de celle-ci, empêchant les fuites périphériques du premier fluide de fonctionnement (F1) dans la deuxième section de freinage (12B), et du deuxième fluide de fonctionnement (F2) dans la première section de freinage (12A).

7. Dispositif d'amortissement de chocs selon l'une quelconque des revendications précédentes, **caractérisé en ce que** ladite unité d'amortissement interne (16) comprend des moyens élastiques (30) configurés pour supporter élastiquement, et générer une contre-poussée sur ledit second poussoir (20).

8. Dispositif d'amortissement de chocs selon la revendication 7, **caractérisé en ce que** lesdits moyens élastiques (30) comprennent un ressort mécanique choisi dans un groupe comprenant un ressort hélicoïdal, un ressort à disque ou un ressort en caoutchouc.

9. Dispositif d'amortissement de chocs selon la revendication 7 ou 8, **caractérisé en ce que** l'unité d'amortissement interne (16) comprend un élément de contenant (24) configuré pour contenir et maintenir lesdits moyens élastiques (30) au moins partiellement comprimés, en empêchant leur extension complète lorsqu'aucune force n'agit sur eux.

10. Dispositif d' amortissement de chocs selon la revendication 9, **caractérisé en ce que** ledit élément de contenant (24) a la forme d'une coupelle ou d'un verre inversé, et est configuré pour permettre, d'une part, à l'extrémité proximale (20b) dudit second poussoir (20) de reposer, et d'autre part, pour permettre de supporter et contenir lesdits moyens élastiques (30).

11. Dispositif d'amortissement de chocs selon la revendication 10, **caractérisé en ce que** ledit élément de contenant (24) flotte verticalement le long dudit axe de fonctionnement (X), en étant toujours disposé dans ladite seconde zone de freinage (12B) entre ledit diaphragme (17) et ladite extrémité inférieure (11b).

12. Dispositif d'amortissement de choc selon l'une des revendications précédentes, **caractérisé en ce que** le second fluide de fonctionnement (F2) a une densité et/ou une pression supérieure à celle du premier fluide de fonctionnement (F1).

13. Dispositif d'amortissement de chocs selon l'une quelconque des revendications précédentes, **caractérisé en ce que** ledit premier fluide de fonctionnement (F1) est un fluide gazeux choisi parmi l'air ou l'azote, et ledit second fluide de fonctionnement (F2) est un fluide à l'état liquide choisi parmi l'huile minérale, l'huile végétale ou l'huile de silicone.
